# EUROPEAN PATENT SPECIFICATION

(11) **EP 1 957 308 B1**
(45) Date of publication and mention of the grant of the patent: **29.03.2017**
(21) Application number: 06821633.2
(22) Date of filing: 10.12.2006
(51) Int. Cl.: B60K 17/00, F16H 55/56

(54) **TRANSMISSION SYSTEM PARTICULARLY USEFUL AS A CONTINUOUSLY VARIABLE TRANSMISSION**
GETRIEBESYSTEM, BESONDERS GEEIGNET ALS STUFENLOSES GETRIEBE
SYSTEME DE TRANSMISSION PARTICULIEREMENT UTILE EN TANT QUE TRANSMISSION A VARIATION CONTINUE

(30) Priority: 10.12.2005 US 597567 P
(43) Date of publication of application: 20.08.2008
(73) Proprietor: Cvtron Ltd, 67652 Tel Aviv (IL)
(72) Inventor: Siman-Tov, Ran, 67652 Tel Aviv (IL)
(74) Representative: Dennemeyer & Associates S.A.
(86) International application number: PCT/IL2006/001415
(87) International publication number: WO 2007/066342

(56) References cited:
- WO-A2-00/14005
- WO-A2-02/061306
- FR-A1- 2 631 420
- FR-A1- 2 643 123
- US-A- 855 915
- US-A- 3 010 328
- US-A- 4 925 433
- US-B2- 6 938 525

## Description

### FIELD AND BACKGROUND OF THE INVENTION

The present invention relates to transmission systems, for selectively coupling two transmission members to each other. The invention is particularly useful in a continuously-variable transmission system, and is therefore described below with respect to that application.

Continuously variable transmissions (CVTs) are well known in the art of mechanical engineering as a means for the continuous variation of the transmission ratio between a driving member and a driven member. A common method of CVT involves conical wheels and flexible belts.

The main engineering challenge in such CVT systems is the sliding of the driving member on the driven member. Such sliding creates wear, loss of energy, noise and other problems. The most efficient way of reducing this sliding is by increasing the friction between the driving member and the driven member. Various methods for increasing the friction are known in the art, including increasing the tension or the pressure, using special slide-preventive fluids, choosing a material with a high friction coefficient, and roughing the surfaces. However, each of these methods suffers from a number of obvious drawbacks.

French patent 2643123 (A1) is an example of one such device in which a ribbed belt interacts with a mechanism on a pulley,at least some of the parts of which mechanisms are capable of transverse movements for the purpose of mutually pinching the parts of the belt.

This document discloses the features of the preamble of claim 1.

### OBJECTS AND BRIEF SUMMARY OF THE PRESENT INVENTION

One object of the present invention is to provide a transmission system including two transmission members which may be selectively coupled and decoupled from each other in an efficient manner. Another object of the invention is to provide such a transmission system which is particularly useful as a continuously-variable transmission (CVT) and which efficiently establishes a non-slip coupling between the two transmission members or decouples the two transmission members.

According to one aspect of the present invention, there is provided a transmission system, comprising: first and second transmission members to be selectively coupled to each other or decoupled from each other; the first transmission member including at least one gripping device having a plurality of spaced gripping elements, the second transmission member including a plurality of coupling elements receivable in an interleaved manner between the gripping elements of the gripping device; the plurality of gripping elements of the gripping device, and/or coupling elements of the second transmission member, being displaceable by a lateral compressive force (a) towards each other to firmly grip the coupling elements of the second transmission member and thereby to establish a non-slip coupling between the two transmission members, and (b) away from each other to decouple the two transmission members from each other.

It will thus be seen that, in a transmission system constructed in accordance with the foregoing features, the friction force is multiplied by the number of contacting surfaces. This permits an increase in the friction force with relatively low contact pressure, and/or with contacting surfaces (e.g., metal) having a low coefficient of friction.

A number of embodiments of the invention are described below for purposes of example.

In some described embodiments, the system further includes a control mechanism effective to selectively apply the lateral compressive force to the gripping elements of a gripping device to displace them towards each other to firmly grip the coupling elements of the second transmission member, and thereby to establish the non-slip coupling between the two transmission members, and to remove the force, and thereby to decouple the two transmissions from each other.

In several of the described embodiments, the first transmission member includes a rotary member and a plurality of the gripping devices spaced circumferentially thereof; and the second transmission member is wound around a part of the rotary member.

In one described embodiment, the second transmission member includes a plurality of cables constituting the coupling elements receivable in an interleaved manner between the gripping elements of each gripping device. In a second described embodiment, the second transmission member includes a plurality of links constituting such coupling elements; and in a third described embodiment, the second transmission member includes a belt having a plurality of ribs constituting such coupling elements.

As indicated earlier, the invention is particularly useful in continuously-variable transmissions (CVTs), wherein the plurality of gripping elements are radially displaceable with respect to the rotary member to thereby permit the transmission ratio between the driving and driven members to be varied. A preferred embodiment of CVT is described below wherein the first transmission member includes a pair of rotatable conical members over which the second transmission member is wound, the conical members being movable towards and away from each other to radially displace the second transmission member such as to define a continuously variable transmission.

As will be described more particularly below, such a transmission system, and particularly such a CVT system, can be constructed to provide efficient coupling and decoupling between the transmission members, and built of relatively simple parts which can be produced in volume and at low cost.

Further features and advantages of the invention will be apparent from the description below.

### BRIEF DESCRIPTION OF THE DRAWINGS

The invention is described below, by way of example only, with reference to the accompanying drawings, wherein:
Figs. 1 and 2 are diagrams helpful in explaining a basic concept involved in the present invention;
Fig. 3 is a schematical view illustrating one form of transmission system constructed in accordance with the present invention, the transmission system being shown in its decoupled condition;
Fig. 4 is a schematical view of the transmission system of Fig. 3 but illustrating it in its non-slip coupled condition;
Fig. 5 is an isometric view illustrating one form of continuously-variable transmission (CVT) constructed in accordance with the present invention, in which one transmission member includes a plurality of cables;
Fig. 6 is an enlarged fragmentary view of a portion of Fig. 5;
Fig. 7 illustrates another transmission member, namely a chain having a plurality of links, which may be used in the CVT of Fig. 5;
Fig. 8 illustrates a further transmission member, namely a belt having a plurality of ribs, which may be used in the CVT system of Fig. 5;
Fig. 9 illustrates a CVT system including a belt constructed in accordance with Fig. 8;
Fig. 10 illustrates a further embodiment of the invention wherein the gripping elements of the gripping device and/or coupling elements of the second transmission member are deformable by a force so as to be displaceable towards and away from each other to effect the coupling and decoupling of the two transmissions, respectively;
Fig. 11 is an enlarged fragmentary view of a portion of Fig. 10;
Fig. 12 illustrates a CVT system constructed in accordance with Figs. 10 and 11;
Fig. 13 is an enlarged fragmentary view of a portion of Fig. 12;
Fig. 14 illustrates another CVT system constructed in accordance with Fig. 10, but further including a control mechanism in the form of a pair of external rollers for selectively effecting the coupling and decoupling operations;
Fig. 15 illustrates another CVT system constructed in accordance with Fig. 10; and
Fig. 16 is an enlarged fragmentary view of a portion Fig. 15.

It is to be understood that the foregoing drawings, and the description below, are provided primarily for purposes of facilitating understanding the conceptual aspects of the invention and possible embodiments thereof, including what is presently considered to be a preferred embodiment. In the interest of clarity and brevity, no attempt is made to provide more details than necessary to enable one skilled in the art, using routine skill and design, to understand and practice the described invention. It is to be further understood that the embodiments described are for purposes of example only, and that the invention is capable of being embodied in other forms and applications than described herein.

### DESCRIPTION OF PREFERRED EMBODIMENTS

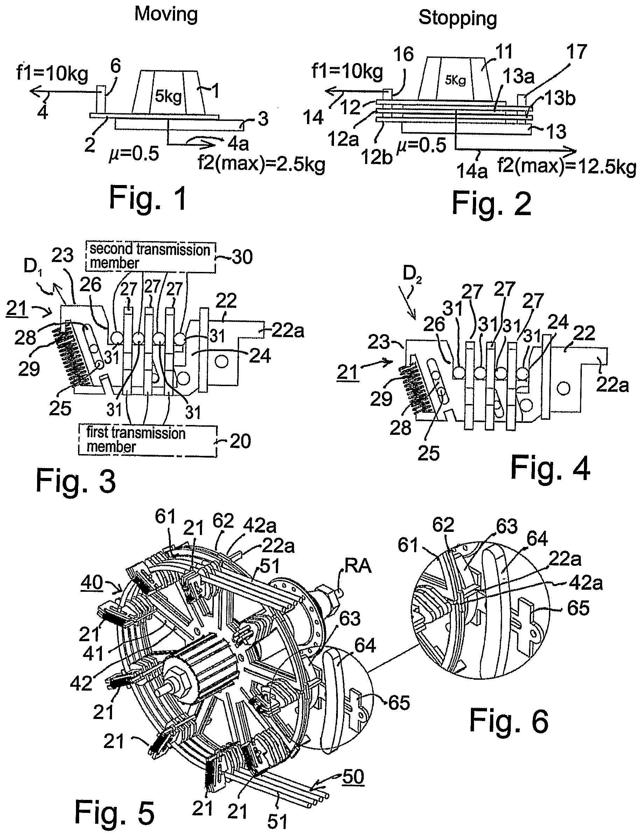

As indicated earlier, the present invention relates to a transmission system which may be efficiently controlled to establish a non-slip coupling between the two transmission members, or to decouple the two transmission members from each other, which transmission system is particularly useful for producing an efficient CVT system. Before describing several preferred embodiments of the invention as illustrated in the accompanying drawings, it will be helpful first to describe the diagrams of Figs. 1 and 2 illustrating a basic concept involved in the present invention.

Fig. 1 illustrates a weight 1 of 5 Kg placed on a surface 2 attached to an object 6 being pulled to the left by a vector force 4 of 10 Kg. Surface 2 slides over a single stationary surface 3, with a friction coefficient (µ) of 0.5. Clearly, the pulling force 4 is sufficient to move object 6 over surface 2. The friction force 4a, which is approximately 2.5 Kg (5 Kg x 0.5), cannot prevent surface 2 from sliding over surface 3.

Fig. 2 illustrates a weight 11 of 5 Kg placed on a surface 12 attached to an object 16. However, two additional surfaces, 12a and 12b, generally parallel to surface 12, are also attached to the same object 16.

A surface 13 supports the three surfaces 12, 12a, 12b. Two additional surfaces, 13a, 13b, located between surfaces 12, 12a and 12b, are connected to surface 13 by a stationary member 17. Surfaces 12, 12a, 12b, 13a and 13b are free to move vertically, but are fixed horizontally: Surfaces 12, 12a and 12b are horizontally fixed to object 16, while surfaces 13a and 13b are horizontally fixed to object 17 and surface 13.

It will be seen that the force 14 required to move object 16 has to overcome five different surfaces of friction. Each surface is characterized by the same parameters as in Fig. 1: the weight (5 Kg) and the friction coefficient (µ=0.5). The friction force vector 14a opposes the pulling force 14 and can be as high as 5 Kg x 0.5 x 5 = 12.5 Kg. Clearly, therefore, the pulling force 14, which is 10 Kg, is not sufficient for moving the object 16 from its static position.

Fig. 2 illustrates the friction force between two objects being multiplied by interleaving several surfaces of the objects with respect to each other while a clamping force is applied to them.

According to a broad aspect of the present invention, the above concept is implemented by providing a transmission system in which the first transmission member includes at least one gripping device having a plurality of spaced gripping elements, and the second transmission member includes a plurality of coupling elements receivable in an interleaved manner between the gripping elements of the gripping device of the first transmission member. The plurality of gripping elements of the gripping device and/or coupling elements of the transmission member are displaceable (a) by a lateral compressive force towards each other to firmly grip the coupling elements of the second transmission member and thereby to establish a non-slip coupling between the two transmission members, and (b) away from each other to decouple the two transmission members from each other.

Figs. 3 and 4 illustrate, for purposes of example, one form of transmission system constructed in accordance with the foregoing features. Fig. 3 illustrates the transmission system in its decoupled condition, whereas Fig. 4 illustrates it in its non-slip coupled condition.

Fig. 3 illustrates the transmission system as including a first transmission member, schematically indicated by box 20, and a second transmission member, schematically indicated by box 30.

The first transmission member 20 includes a gripping device, generally designated 21, constituted of two parts 22 and 23 relatively displaceable with respect to each other. Part 22 includes a wall 24 on one side, and a pair of pins 25 on the opposite side. Displaceable part 23 of the gripping device includes a wall 26 on one side and a plurality of vertical plates or fingers 27 spaced from each other and from wall 26.

Part 23 further includes a diagonal slot 28 receiving the two pins 25 carried by part 22. A spring 29 normally urges part 23 outwardly with respect to part 22, to the position illustrated in Fig. 3 wherein one of the pins 25 carried by part 22 limits against the end of diagonal slot 28 of part 23. This is the normal, decoupled condition of gripping device 21 of the first transmission member 20.

In the example illustrated in Fig. 3, the second transmission member 30 includes a plurality of parallel cables 31 which are received within the spaces between walls 24 and 26 and the vertical plates or fingers 27 of the two parts of gripping device 21. Cables 31, constituting coupling elements of the second transmission member 30, are thus receivable in an interleaved manner between elements 24, 26 and 27 of gripping device 21 of the first transmission member 20, such that displacing part 23 towards part 22 of the gripping device will effect a non-slip coupling between the two transmission members, whereas displacing part 23 away from part 22, will decouple the two transmission members.

Fig. 3 illustrates the condition wherein cables 31 of the second transmission member 30 are not tensioned. In this condition, spring 29 urges part 23 of gripping device 21 in the upward direction, as shown by arrow D₁. Accordingly, the spaces between the two parts 22, 23 occupied by cables 31 will be relatively large, so that the second transmission member 30 is decoupled from the first transmission member.

Fig. 4 illustrates the condition wherein cables 31 of the second transmission member 30 are tensioned, thereby producing a force displacing part 23 in the downward direction, as shown by arrow D₂, with respect to part 22 of the gripping device 21, against the action of spring 29. In this condition, part 23 is moved towards part 22, thereby firmly clamping the cables 31 between elements 26, 27 and 24, of the two parts of the gripping device, to effect a non-slip coupling between the two transmission members.

It will thus be seen that when cables 31 of the second transmission member 30 are not tensioned with respect to gripping device 21 of the first transmission member 20, the two transmission members are decoupled from each other (Fig. 3); whereas when cables 31 of the second transmission member 30 are tensioned with respect to gripping device 21 of the first transmission member 20, a non-slip coupling is effected between the two transmission members (Fig. 4).

Figs. 3 and 4 illustrate part 22 of gripping device 21 as including an outwardly-extending arm 22a. This arm is used in a CVT system including a rotary member in order to change the effective diameter of the rotary member, as will be described more particularly below with respect to Fig. 5.

Fig. 5 illustrates a transmission system corresponding to that of Figs. 3 and 4 wherein that the first transmission member, therein generally designated 40, is a rotary member. It includes a plurality of gripping devices 21 around its circumference, each gripping device being of the construction illustrated in Figs. 3 and 4. The second transmission member, therein designated 50, includes a plurality of parallel cables 51 wound around a part of rotary member 40. For example, the transmission illustrated in Fig. 5 could be the rear half of a CVT mechanism of a bicycle. For purposes of example, rotary member 40 includes nine gripping devices 21 equally spaced around its circumference.

Cables 51, constituting the second transmission member 50 coupled to the rotary member 40, should be strong cables, e.g., woven steel cables or extruded nylon cables. These cables play the role of the chain of a conventional bicycle. When the cables at the upper side of rotary member 40 are pulled (e.g., by the front half of the CVT mechanism, not shown), the cables press the gripping devices 21 on the rear side of the rotary member, forcing them radially towards the axis of rotation RA. This pressure causes the gripping devices to firmly clamp on the cables, as explained above with respect to Figs. 3 and 4, and thereby enables a very strong torque to be applied to the rear wheel of the bicycle without slipping. At the same time, the gripping devices 21 on the front side of the rotary member are relieved from the pressure of the cables, causing the gripping devices to release the cables, as also explained above with respect to Figs. 3 and 4.

It will thus be seen that such a mechanism can be used for providing a smooth and efficient transmission for the bicycle.

It will also be seen that by varying the radial position of the gripping devices 21 on rotary member 40, the transmission ratio of the described mechanism can be continuously changed to produce a CVT system. Thus, as seen in Fig. 5, each of the gripping devices is movable within a slot 41 formed in a radial arm 42 of the rotary member 40, so that the effective diameter of the rotary member, with respect to the cables 51, can be continuously varied to thereby vary the transmission ratio between the two transmission members 40 and 50.

The radial displacement of gripping devices 21 can be effected in a number of manners. Figs. 5 and 6 illustrate one arrangement, including a pair of circular rings 61, 62, fixed to rotary member 40 so as to rotate therewith. Rings 61, 62 receive between them the ends 42a of radial arms 42 of the rotary member, with the arms 22a of the gripping devices projecting outwardly of the two rings 61, 62.

The outwardly-projecting arms 22a of the gripping devices 21 are adapted to rotate between a pair of curved guide plates 63, 64 carried by a mounting plate 65 fixed to the frame in which rotary member 40 is rotatably mounted. It will thus be seen that as the rotary member 40 is rotated, the arms 22a of gripping devices 21 successively pass between the two guide plates 63, 64. The arrangement is such that the two guide plates may be positioned radially with respect to the mounting plate 65 to engage arms 22a and to move their respective gripping devices 21 in the radial direction, either inwardly to decrease the effective diameter of the rotary member, or outwardly to increase the effective diameter of the rotary member. The movement of the two guide plates 63, 64 may be effected manually, or automatically, e.g., by a centrifugal-force operated weight.

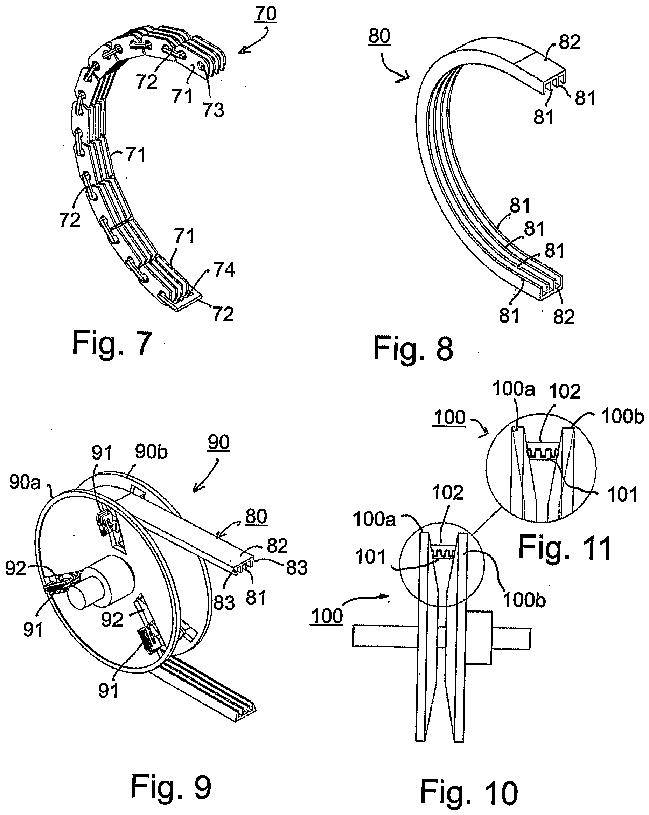

Fig. 7 illustrates a chain-type transmission member, generally designated 70, which may used instead of the cable-type transmission member 50 of Fig. 5. Transmission member 70 in Fig. 7 includes a plurality of groups of links 71 pivotally coupled together by a plurality of bridging members 72. As shown in Fig. 7, each group of links 71 includes four parallel links formed with openings 73 at their opposite ends for receiving the bridging member 72. As further shown in Fig. 7, each bridging member 72 is of a square configuration having opposed legs received in the two adjacent groups of links 71. The inner surfaces of the two legs of each bridging member 72 are formed with inwardly-extending projections 74 serving as spacers for spacing the links 71 in the respective group from each other. Projections 74 are constructed so as to permit some lateral movement of the links 71 but to limit such lateral movement such as to maintain them in spaced relationship and thereby to enable them to be interleaved with the gripping elements of the gripping devices 21, Fig. 5.

An advantage in the chain construction of Fig. 7 is that the links can be built of strong material, such as steel, and still be sufficiently flexible to be wound around the rotary member 40.

Fig. 8 illustrates a belt-type transmission member 80 which also may be used instead of the cable-type transmission member 50 of Fig. 5. In this case, the transmission belt 80 is integrally formed with a plurality of parallel ribs 81 joined by a web 82, which may be used as the transmission member instead of the cable-type transmission member 50 of Fig. 5 or chain-type transmission member 70 of Fig. 7. In this case, the ribs 81 serve as the coupling elements receivable in an interleaved manner between the gripping elements of the gripping devices 21 of Fig. 5.

Fig. 9 illustrates one half of another CVT system constructed in accordance with the present invention. For purposes of this example, the CVT system of Fig. 9, therein generally designated 90, includes the multi-ribbed belt 80 of Fig. 8, including the plural ribs 81 joined by the web 82, except that the end ribs are of decreasing thickness from the web, as show at 83.

In the CVT transmission of Fig. 9, the first transmission member 90 is constituted of two rotary cones 90a, 90b. The cones are movable towards and away from each other to thereby vary the effective diameter presented by their outer surface receiving the belt 80. Gripping devices 91, corresponding to gripping devices 21 of Figs. 3-5, are received within radial slots 92 formed in the enlarged bases of the two conical members 90a, 90b, and are radially displaceable in those slots according to the effective diameter defined by the outer surfaces of the conical members.

It will thus be seen that the outer surfaces of the two conical members 90a, 90b define a circular track for supporting belt 80, which circular track has an effective diameter according to the axial position of the two conical members with respect to each other. It will also be seen that the gripping devices 91 are effective, according to their radial position within their respective slots 92, to firmly grip the ribs 81 of belt 82, when the gripping devices are actuated as described above with respect to Figs. 3 and 4, to effect a non-slip coupling between conical members 90a, 90b and belt 80.

The transmission system illustrated in Fig. 9 thus constitutes a part of a CVT system in which the transmission ratio may be continuously varied, and in which the transmission members can be conveniently controlled to decouple them or to couple them with a non-slip coupling.

Various means may be used for displacing the two conical members 90a, 90b axially with respect to each other in order to continuously vary the effective diameter produced by their outer surfaces, and also to radially displace the gripping devices 91 in their respective slots 92. Examples of mechanisms that can be used for this purpose are described in PCT Application No. IL/02/00075, WO 02/06/306.

While Fig. 9 illustrates three such gripping devices, it will be appreciated that a larger number could be used, according to the particular application. Preferably, however, there are at least three such gripping devices equally spaced around the rotary transmission member 90.

Figs. 10 and 11 illustrate a transmission, generally designated 100, also including two conical 100a, 100b as in Fig. 9, but a different type of gripping device 101, radially displaceable with respect to the conical members. In this case, gripping devices 101 are ribbed members, similar to the construction of ribbed belt 80 in Fig. 8, and cooperate with the ribbed belt, shown at 102, to effect the coupling and decoupling between the belt and the rotary member. Preferably, both the gripping elements 101 and the ribbed belt 102 are of a deformable construction so that a strong tension on the belt will effect a non-slip coupling between the belt 102 and gripping devices 101, whereas slackening the belt will decouple it from the gripping devices. Thus, by controlling the tension applied to belt 102, and thereby the force exerted by the belt on gripping devices 101, the belt may be selectively coupled or decoupled from the rotary member 100 at any effective diameter of that member.

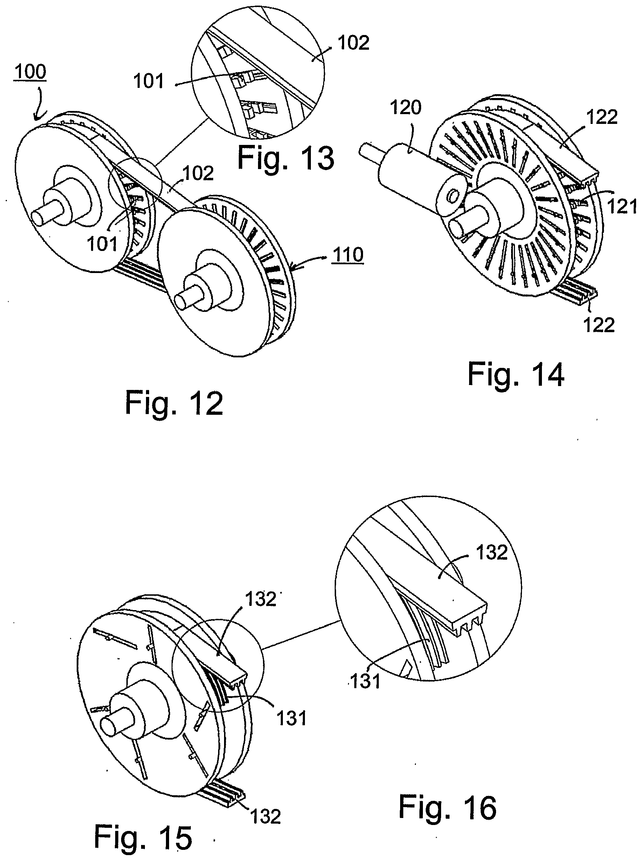

Figs. 12 and 13 illustrate a complete CVT system including rotary member 100 of Figs. 10 and 11 coupled by belt 102 to a second rotary member 110 of the same construction as rotary member 100. As in Fig. 12, the gripping devices 101 of each rotary member 100, 110, are movable in the radial direction to change the effective diameter of the respective rotary member, it being appreciated that when the effective diameter of one rotary member is increased, the other is decreased. Belt 102 coupling the two rotary members is tensioned so that a non-slip coupling is effected with respect to the engaged portions of the two rotary members, whereas the slackening of the belt immediately decouples it from the rotary members.

Fig. 14 illustrates a transmission system similar to that of Fig. 5 or Fig. 9, except that it includes a pair of opposed pressure rollers 120 (only one shown in Fig. 14) which can be controlled in order to enhance the coupling of the belt with respect to the rotary member at the portions of the rotary member engaged by the belt. In the example illustrated in Fig. 14, the gripping devices 121 carried by the rotary member are of a similar ribbed construction as gripping devices 101 in Figs. 10 and 11, and the ribbed belt 122 is of a similar ribbed construction as belt 102 in Figs. 10 and 11.

Figs. 15 and 16 illustrate a variation wherein each of the gripping devices, therein designated 131, extends for a longer distance around the circumference of the respective rotary member, such that a fewer number of such gripping devices would be needed to couple or decouple the ribbed belt 132 thereto. Thus, whereas Fig. 14 illustrates a large number of such gripping devices, Figs. 15 and 16, by using longer gripping devices, requires but only a few of such devices.

While the invention has been described with respect to several preferred embodiments, it will be appreciated that these are set forth merely for purposes of example, and that many variations may be made. For example, other types of gripping devices could be used, or other means for displacing the gripping elements to effect the coupling and decoupling with respect to the coupling element. In addition, the gripping elements could include a mechanism for gradually delaying the coupling to avoid abrupt coupling. While the invention is particularly useful in continuously-variable transmission, it can also be used in other applications where a driven member is to be coupled and decoupled with respect to a driving member. Many other variations, modifications and applications of the invention will be apparent.

## Claims

1. A variable speed transmission system, comprising:
a rotary first transmission member (20 or 40 or 90 or 100) mounted on a rotation axis (RA);
a second transmission member (30 or 50 or 70 or 80 or 102 or 122 or 132) to be selectively coupled to and decoupled from said first transmission member;
said second transmission member being wound around part of said first transmission member;
said first transmission member including at least one gripping device (21 or 91 or 101 or 131) that is moveable radially with respect to said rotation axis and includes a plurality of laterally spaced and laterally displaceable gripping elements (26, 27 or 131 or 101);
said second transmission member including a plurality of laterally spaced and laterally displaceable coupling elements (31 or 51 or 71 or 81)
said transmission members being configured to be coupled together by said at least one gripping device and by said plurality of coupling elements on said second transmission member that are receivable in an interleaved manner between said gripping elements of said at least one gripping device as the first transmission member rotates,
**characterized in that**:
upon application of a lateral compressive force said gripping elements move toward each other and said interleaved coupling elements also move toward each other to decrease the spaces between all said interleaved elements;
whereby the surfaces of each interleaved element presses on the surfaces of its adjacent elements and all the gripping and coupling elements clamp together to increase the friction force between said first and second transmission members according to a number of contact surfaces between the interleaved elements.

2. The transmission system according to Claim 1, wherein application of tension to said second transmission member provides said lateral compressive force.

3. The transmission system according to Claim 1 or Claim 2, wherein said second transmission member is a ribbed belt (80 or 102), with deformable ribs (81) forming said coupling elements.

4. The transmission system according to any of the previous claims, wherein said first transmission member includes a plurality of said gripping devices spaced circumferentially on said first transmission member.

5. The transmission system according to any one of claims 1, 2, or 4, wherein said second transmission member includes a plurality of cables (51) constituting said coupling elements, or is comprised of a chain (70 includes plurality of laterally spaced and laterally displaceable links (71),wherein said links (71) constitute said coupling elements.

6. The transmission system according to any of the previous claims, wherein radial displacement of said at least one gripping device on said first transmission member changes the effective diameter of the said first transmission member with respect to said second transmission member to thereby vary the transmission ratio between said transmission members.

7. The transmission system according to any of the previous Claims, wherein each gripping device is radially displaceable by a pair of radially movable guide members (63, 64) spaced from each other for receiving between them a projection (22a) of each gripping device as it rotates with the rotary first transmission member.

8. The transmission system according to any of Claim 1 or Claims 3-7, wherein said transmission system further includes a pair of opposed roller members (120) on opposite sides of the part of the rotary member around which second transmission member is wound to provide said laterally compressive force.

9. The transmission system according to any of the previous claims, wherein said first transmission member (90) includes a pair of rotatable conical members (90a, 90b) over which said second transmission member (80) is wound; said conical members being movable towards and away from each other to radially displace said second transmission member such as to define a continuously variable transmission.

10. The transmission system according to any of the previous claims, wherein each gripping device (21 or 91) includes:
a first part (22) including a wall (24) that forms an additional gripping element; and
a second part (23) displaceable with respect to said first part;
said second part (23) including a wall (26) and a plurality of fingers (27) together comprising said plurality of said laterally spaced and laterally displaceable gripping elements interleaveable with respect to said plurality of coupling elements such that the displacement of said second part of the gripping device with respect to said first part in one direction creates said increased friction coupling between said two transmission members and displacement in the opposite direction, permits said two transmission members to be decoupled from each other.

11. The transmission system according to Claim 10, wherein each said gripping device includes a spring (29) normally biasing said displaceable part in the direction to decouple the two transmission members from each other.

12. The transmission system according to Claim 10 or Claim 11, wherein said gripping device is constructed such that said second transmission member, when tensioned, applies a force to said displaceable part (23) displacing it in the direction to effect the increased friction coupling between the two transmission members.

13. The transmission system according to any of Claims 10-12, wherein said first and second parts include a pin (25) in one part movable in a diagonal slot (28) in the other part effective to displace said displaceable part in the direction to create said increased friction force upon the tensioning of said second transmission member.

14. The transmission system according to any of the previous claims, comprising a further first transmission member (110) like said first transmission member (20 or 40 or 90) including at least one gripping device (21 or 91 or 101 or 131) having a plurality of laterally spaced and laterally displaceable gripping elements (26, 27 or 131 or 101), wherein said second transmission member (30 or 50 or 70 or 80 or 102 or 122 or 132) is wound around part of said further first transmission member, and wherein said plurality of spaced coupling elements (31 or 51 or 71 or 81) on said second transmission member are receivable in an interleaved manner between at least some of said gripping elements (101) of said gripping device on said further rotary transmission member (110).

15. The transmission system according to any of Claims 1-3, 5, 6, 8, 9, 12, or 14, wherein said gripping devices (91 or 101 or 131) and/or said second transmission member (80 or 102 or 122) include ribs (101, 81) which form said gripping elements and/or said coupling elements, said ribs being deformable by said lateral compressive force such that tension on said second transmission member will press said gripping and coupling elements together and effect an increased friction coupling between the first and second transmission member, whereas slackening the tension will decouple the transmission members from each other.

## Patentansprüche

1. Getriebesystem mit veränderlicher Drehzahl, das umfasst:
ein erstes Drehgetriebeelement (20 oder 40 oder 90 oder 100), das auf einer Drehachse (RA) angebracht ist;
ein zweites Getriebeelement (30 oder 50 oder 70 oder 80 oder 102 oder 122 oder 132), das selektiv mit dem ersten Getriebeelement zu verbinden und selektiv von diesem zu lösen ist;
wobei das zweite Getriebeelement um einen Teil des ersten Getriebeelements gewickelt ist;
wobei das erste Getriebeelement zumindest eine Greifvorrichtung (21 oder 91 oder 101 oder 131) beinhaltet, die in Bezug auf die Drehachse radial beweglich ist und eine Mehrzahl von lateral beabstandeten und lateral verschiebbaren Greifelementen (26, 27 oder 131 oder 101) beinhaltet;
das zweite Getriebeelement eine Mehrzahl von lateral beabstandeten und lateral verschiebbaren Verbindungselementen (31 oder 51 oder 71 oder 81) beinhaltet
wobei die Getriebeelemente so konfiguriert sind, dass sie von der zumindest einen Greifvorrichtung und der Mehrzahl von Verbindungselementen auf dem zweiten Getriebeelement miteinander verbunden werden, die zwischen den Greifelementen der zumindest einen Greifvorrichtung zwischengeschaltet aufnehmbar sind, während sich das erste Getriebeelement dreht,
**dadurch gekennzeichnet, dass**:
die Greifelemente sich beim Anlegen einer lateralen Druckkraft zueinander bewegen und sich die zwischengeschalteten Verbindungselemente ebenfalls zueinander bewegen, um den Raum zwischen allen zwischengeschalteten Elementen zu verringern;
wobei die Oberflächen jedes zwischengeschalteten Elements auf die Oberflächen der benachbarten Elemente davon pressen und alle Greif- und Verbindungselemente gemeinsam klemmen, um die Reibungskraft zwischen den ersten und zweiten Getriebeelementen gemäß einer Anzahl von Kontaktflächen zwischen den zwischengeschalteten Elementen zu erhöhen.

2. Getriebesystem nach Anspruch 1, wobei das Anlegen von Spannung an das zweite Getriebeelement die laterale Druckkraft bereitstellt.

3. Getriebesystem nach Anspruch 1 oder 2, wobei das Getriebeelement ein Rippenriemen (80 oder 102) ist, wobei verformbare Rippen (81) die Verbindungselemente bilden.

4. Getriebesystem nach einem der vorstehenden Ansprüche, wobei das erste Getriebeelement eine Mehrzahl der Greifelemente beinhaltet, die auf dem ersten Getriebeelement umfangsmäßig beabstandet sind.

5. Getriebesystem nach einem der Ansprüche 1, 2 oder 4, wobei das zweite Getriebeelement eine Mehrzahl von Kabeln (51) beinhaltet, die die Verbindungselemente bilden, oder aus einer Kette (70 besteht, eine Mehrzahl von lateral beabstandeten und lateral verschiebbaren Verknüpfungselementen (71) beinhaltet, wobei die Verknüpfungselemente (71) die Verbindungselemente bilden.

6. Getriebesystem nach einem der vorstehenden Ansprüche, wobei das radiale Verschieben der zumindest einen Greifvorrichtung auf dem ersten Getriebeelement den effektiven Durchmesser des ersten Getriebeelements in Bezug auf das zweite Getriebeelement ändert, um somit das Übersetzungsverhältnis zwischen den Getriebeelementen zu variieren.

7. Getriebesystem nach einem der vorstehenden Ansprüche, wobei jede Greifvorrichtung durch ein Paar radial beweglicher Führungselemente (63, 64) radial verschiebbar ist, die voneinander beabstandet sind, um zwischen ihnen einen Vorsprung (22a) jeder Greifvorrichtung aufzunehmen, während sie sich mit dem ersten Drehgetriebeelement dreht.

8. Getriebesystem nach einem der Ansprüche 1 oder 3 bis 7, wobei das Getriebesystem des Weiteren ein Paar entgegengesetzter Rollenelemente (120) auf gegenüberliegenden Seiten des Teils des Drehelements beinhaltet, um das das zweite Getriebeelement gewickelt ist, um die laterale Druckkraft bereitzustellen.

9. Getriebesystem nach einem der vorherigen Ansprüche, wobei das erste Getriebeelement (90) ein Paar drehbarer konischer Elemente (90a, 90b) beinhaltet, über die das zweite Getriebeelement (80) gewickelt ist; wobei die konischen Elemente zueinander und voneinander weg beweglich sind, um das zweite Getriebeelement radial zu verschieben, so dass ein stufenloses Getriebe definiert wird.

10. Getriebesystem nach einem der vorstehenden Ansprüche, wobei jede Greifvorrichtung (21 oder 91) beinhaltet:
einen ersten Teil (22), der eine Wand (24) beinhaltet, der ein zusätzliches Greifelement bildet;
und
einen zweiten Teil (23), der in Bezug auf den ersten Teil verschiebbar ist;
wobei der zweite Teil (23), der eine Wand (26) beinhaltet, und eine Mehrzahl von Fingern (27) gemeinsam die Mehrzahl der lateral beabstandeten und lateral verschiebbaren Greifelemente umfassen, die in Bezug auf die Mehrzahl von Verbindungselementen zwischenschaltbar sind, so dass das Verschieben des zweiten Teils der Greifvorrichtung in Bezug auf den ersten Teil in eine Richtung die erhöhte Reibungskupplung zwischen den zwei Getriebeelementen erzeugt, und das Verschieben in die entgegengesetzte Richtung ermöglicht, dass die zweite Getriebeelemente voneinander gelöst werden.

11. Getriebesystem nach Anspruch 10, wobei jede Greifvorrichtung eine Feder (29) beinhaltet, die für gewöhnlich den verschiebbaren Teil in die Richtung vorspannt, so dass die zwei Getriebeelemente voneinander gelöst werden.

12. Getriebesystem nach Anspruch 10 oder 11, wobei die Greifvorrichtung so konstruiert ist, dass das zweite Getriebeelement, wenn es gespannt wird, eine Kraft an den verschiebbaren Teil (23) anlegt, wodurch dieser in die Richtung verschoben wird, so dass die erhöhte Reibungskupplung zwischen den zwei Getriebeelementen bewirkt wird.

13. Getriebesystem nach einem der Ansprüche 10 bis 12, wobei die ersten und zweiten Teile einen Stift (25) in einem Teil beinhalten, der in einem diagonalen Schlitz (28) im anderen Teil beweglich ist, um ein Verschieben des verschiebbaren Teils in die Richtung zu bewirken, so dass beim Spannen des zweiten Getriebeelements die erhöhte Reibkraft erzeugt wird.

14. Getriebesystem nach einem der vorstehenden Ansprüche, das ein weiteres ersten Getriebeelement (110) wie das erste Getriebeelement (20 oder 40 oder 90) umfasst, das zumindest eine Greifvorrichtung (21 oder 91 oder 101 oder 131) mit einer Mehrzahl von lateral beabstandeten und lateral verschiebbaren Greifelementen (26, 27 oder 131 oder 101) beinhaltet,
wobei das zweite Getriebeelement (30 oder 50 oder 70 oder 80 oder 102 oder 122 oder 132) um einen Teil des weiteren ersten Getriebeelements gewickelt ist, und wobei die Mehrzahl von beabstandeten Verbindungselementen (31 oder 51 oder 71 oder 81) auf dem zweiten Getriebeelement zwischengeschaltet zwischen zumindest manchen der Greifelemente (101) der Greifvorrichtung auf dem weiteren Drehgetriebeelement (110) aufnehmbar ist.

15. Getriebesystem nach einem der Ansprüche 1 bis 3, 5, 6, 8, 9, 12 oder 14, wobei die Greifvorrichtungen (91 oder 101 oder 131) und/oder das zweite Getriebeelement (80 oder 102 oder 122) Rippen (101, 81) beinhalten, die die Greifelemente und/oder die Verbindungselemente bilden, wobei die Rippen durch die laterale Druckkraft verformbar sind, so dass eine Spannung am zweiten Getriebeelement die Greif- und Verbindungselemente zusammendrückt und eine erhöhte Reibungskupplung zwischen dem ersten und dem zweiten Getriebeelement bewirkt, wobei ein Lösen der Spannung die Getriebeelemente hingegen voneinander löst.

## Revendications

1. Système de transmission à vitesse variable, comprenant :
un premier élément de transmission rotatif (20 ou 40 ou 90 ou 100) monté sur un axe de rotation (RA) ;
un second élément de transmission (30 ou 50 ou 70 ou 80 ou 102 ou 122 ou 132) destiné à être sélectivement relié à et détaché dudit premier élément de transmission ;
ledit second élément de transmission étant enroulé autour d'une partie dudit premier élément de transmission ;
ledit premier élément de transmission comprenant au moins un dispositif de saisie (21 ou 91 ou 101 ou 131) qui est mobile radialement par rapport audit axe de rotation et qui comprend une pluralité d'éléments de saisie latéralement espacés et latéralement mobiles (26, 27 ou 131 ou 101) ;
ledit second élément de transmission comprenant une pluralité d'éléments de liaison latéralement espacés et latéralement mobiles (31 ou 51 ou 71 ou 81),
lesdits éléments de transmission étant configurés pour être reliés ensemble par ledit dispositif de saisie au moins et par ladite pluralité d'éléments de liaison sur ledit second élément de transmission, et pouvant être reçus de manière entrelacée entre lesdits éléments de prise et ledit dispositif de prise au moins lorsque le premier élément de transmission tourne,
**caractérisé en ce que** :
lors de l'application d'une force de compression radiale, lesdits éléments de saisie se déplacent les uns vers les autres, et lesdits éléments de liaison entrelacés se déplacent également les uns vers les autres afin de réduire les espaces entre tous lesdits éléments entrelacés ;
moyennant quoi les surfaces de chaque élément entrelacé appuient sur les surfaces de ses éléments adjacents, et tous les éléments de saisie et de liaison se fixent ensemble afin d'augmenter la force de friction entre lesdits premier et second éléments de transmission selon un nombre de surfaces de contact entre les éléments entrelacés.

2. Système de transmission selon la revendication 1, dans lequel l'application d'une tension sur ledit second élément de transmission assure ladite force de compression latérale.

3. Système de transmission selon la revendication 1 ou 2, dans lequel ledit second élément de transmission est une courroie nervurée (80 ou 102), avec des nervures déformables (81) qui forment lesdits éléments de liaison.

4. Système de transmission selon l'une quelconque des revendications précédentes, dans lequel ledit premier élément de transmission comprend une pluralité desdits dispositifs de saisie espacés de manière circonférentielle sur ledit premier élément de transmission.

5. Système de transmission selon l'une quelconque des revendications 1, 2 ou 4, dans lequel ledit second élément de transmission comprend une pluralité de câbles (51) constituant lesdits éléments de liaison, ou est composé d'une chaîne (70) qui comprend une pluralité de maillons latéralement espacés et latéralement mobiles (71), dans lequel lesdits maillons (71) constituent lesdits éléments de liaison.

6. Système de transmission selon l'une quelconque des revendications précédentes, dans lequel le déplacement radial dudit dispositif de saisie au moins sur ledit premier élément de transmission change le diamètre effectif dudit premier élément de transmission par rapport audit second élément de transmission afin de faire varier le rapport de transmission entre lesdits éléments de transmission.

7. Système de transmission selon l'une quelconque des revendications précédentes, dans lequel chaque dispositif de saisie est radialement mobile à l'aide d'une paire d'éléments de guidage radialement mobiles (63, 64) espacés l'un de l'autre afin de recevoir entre eux une saillie (22a) de chaque dispositif de saisie lorsqu'il tourne avec le premier élément de transmission rotatif.

8. Système de transmission selon l'une quelconque des revendications 1 ou 3 à 7, dans lequel ledit système de transmission comprend en outre une paire d'éléments de galets opposés (120) sur les côtés opposés de la partie de l'élément rotatif autour duquel le second élément de transmission est enroulé afin d'assurer ladite force latéralement compressive.

9. Système de transmission selon l'une quelconque des revendications précédentes, dans lequel ledit premier élément de transmission (90) comprend une paire d'éléments coniques rotatifs (90a, 90b) sur lesquels ledit second élément de transmission (80) est enroulé ; lesdits éléments coniques étant mobiles vers et à l'écart les uns des autres afin de déplacer radialement ledit second élément de transmission de façon à définir une transmission variable en continu.

10. Système de transmission selon l'une quelconque des revendications précédentes, dans lequel chaque dispositif de saisie (21 ou 91) comprend :
une première partie (22) comprenant une paroi (24) qui forme un élément de saisie supplémentaire ;
et
une seconde partie (23) mobile par rapport à ladite première partie ;
ladite seconde partie (23) comprenant une paroi (26) et une pluralité de doigts (27) comprenant ensemble ladite pluralité desdits éléments de saisie latéralement espacés et latéralement mobiles qui peuvent être entrelacés par rapport à ladite pluralité d'éléments de liaison de sorte que le déplacement de ladite seconde partie du dispositif de saisie par rapport à ladite première partie dans une direction crée ladite augmentation de l'accouplement par friction entre lesdits deux éléments de transmission et un déplacement dans la direction opposée, et permette auxdits deux éléments de transmission d'être détachés l'un de l'autre.

11. Système de transmission selon la revendication 10, dans lequel chaque dispositif de saisie comprend un ressort (29) qui incline normalement ladite partie mobile dans la direction de détachement des deux éléments de transmission l'un de l'autre.

12. Système de transmission selon la revendication 10 ou 11, dans lequel ledit dispositif de saisie est fabriqué de sorte que ledit second élément de transmission, lorsqu'il est tendu, exerce une force sur ladite partie mobile (23) afin de la déplacer dans la direction d'augmentation de l'accouplement par friction entre les deux éléments de transmission.

13. Système de transmission selon l'une quelconque des revendications 10 à 12, dans lequel lesdites première et seconde parties comprennent une goupille (25) dans une partie mobile dans une fente diagonale (28) située dans l'autre partie afin de déplacer ladite partie mobile dans la direction d'augmentation de la force de friction lors de la tension dudit second élément de transmission.

14. Système de transmission selon l'une quelconque des revendications précédentes, comprenant un autre premier élément de transmission (110) tel que ledit premier élément de transmission (20 ou 40 ou 90) comprenant au moins un dispositif de saisie (21 ou 91 ou 101 ou 131) ayant une pluralité d'éléments de saisie latéralement espacés et latéralement mobiles (26, 27 ou 131 ou 101), dans lequel ledit second élément de transmission (30 ou 50 ou 70 ou 80 ou 102 ou 122 ou 132) est enroulé autour d'une partie dudit autre premier élément de transmission, et dans lequel ladite pluralité d'éléments de liaison espacés (31 ou 51 ou 71 ou 81) sur ledit second élément de transmission peuvent être reçus de manière entrelacée entre au moins certains desdits éléments de saisie (101) dudit dispositif de saisie sur ledit autre élément de transmission rotatif (110).

15. Système de transmission selon l'une quelconque des revendications 1 à 3, 5, 6, 8, 9, 12 ou 14, dans lequel lesdits dispositifs de saisie (91 ou 101 ou 131) et/ou ledit second élément de transmission (80 ou 102 ou 122) comprennent des nervures (101, 81) qui forment lesdits éléments de saisie et/ou lesdits éléments de liaison, lesdites nervures étant déformables par ladite force de compression latérale de sorte que la tension exercée sur ledit second élément de transmission appuie lesdits éléments de saisie et de liaison les uns sur les autres et fasse augmenter l'accouplement par friction entre le premier et le second éléments de transmission, tandis qu'un relâchement de la tension sépare les éléments de transmission les uns des autres.
